# EUROPEAN PATENT APPLICATION

(11) **EP 2 080 558 A1**
(43) Date of publication of application: **22.07.2009**
(21) Application number: 08021942.1
(22) Date of filing: 15.12.2003
(51) Int. Cl.: B02C 19/06, B02C 13/00, B02C 23/18, B02C 23/08, B01J 2/00

(54) **Device for coating a finely milled solid**

(30) Priority: 13.12.2002 CH 21282002
(62) Divisional of application: 03799481.1
(71) Applicant: Syngenta Participations AG, 4058 Basel (CH)
(72) Inventor: Hauk, Gerhard, 4058 Basel (CH)
(74) Representative: Osborn, Martin Keith

(57) **Abstract**

The present invention relates to a fine milling device suitable for applying a liquid to a solid that is to be finely milled comprising a milling zone for finely milling said solid; means (103,105) for introducing said solid to said milling zone; a nozzle (107) for introducing said liquid as a finely divided liquid into said milling zone either separately during the milling operation or simultaneously with said solid that is to be finely milled; a regulating unit (118) for controlling the ratio of said solid to said liquid; and means (113) for discharging product.

## Description

The present invention relates to a process for the application of liquids to finely milled solids and to a device for carrying out this process.

The processing of finely milled solids charged with liquid is widespread in many branches of industry, for example in the industrial manufacture and processing of foodstuffs, fine chemicals, pharmaceuticals or crop protection products. The application of the liquid is intended to provide the finely milled solid with particular properties which are advantageous for the intended use.

It is known to apply liquids to finely milled solids as follows: the solid is first finely milled, and the liquid that is to be applied is then applied to the solid in a mixing device in the form of a fine spray, followed by intensive mixing of the mixture thus obtained.

Using that process it is not possible to achieve a homogeneous distribution of the liquid on the solid, because lumps form during the mixing of the liquid with the finely milled solid, especially when viscous liquids are being used. The resulting mixture must therefore undergo at least one further milling process. The known process for the application of liquids to milled solids accordingly comprises the following individual steps:
- milling of the solid;
- application of the liquid by spraying, and mixing of the milled solid with the liquid; and
- further milling and/or homogenisation of the resulting mixture, one or more further milling operations being necessary, depending on the type of liquid applied.

Not only is this process laborious, but in most cases, especially when the liquid to be applied is viscous, a homogeneous distribution of the liquid on the particles of the solid is not achieved, despite the subsequent additional milling operation.

The object of the present invention is to provide a process for the application of a liquid to a finely milled solid, which process avoids the disadvantages of the prior art process and, in a simple manner, permits the production of finely milled solids whose particles are homogeneously charged with a liquid.

According to the present invention it is proposed to achieve that object as follows: the liquid to be applied to the finely milled solid is introduced into the milling zone of a fine milling apparatus during the milling operation or simultaneously with the introduction of the material for milling, and the fine milling is carried out in the presence of the finely divided liquid.

The process according to the invention can in principle be carried out using any conventional fine milling apparatus if such an apparatus is provided with a device which enables the liquid that is to be applied to the finely milled solid to be introduced into the milling zone during the milling operation or simultaneously with the introduction of the material for milling. Especially suitable are mills, in which the material for milling is moved by a gas stream flowing through the milling zone, and which are provided with a device with which the finely divided liquid is introduced into the milling zone simultaneously with the introduction of the material for milling. Especially suitable mills are, for example, gas-jet mills or fluidised-bed counter-jet mills, in which the solid moved by the milling gas stream flowing at very high speed is comminuted in the milling zone by the action of the impact of the particles of the solid. When that type of mill is used, the excess pressure of the milling gas introduced into the milling zone is in the range of from 5 bar to 10 bar, especially from 6 bar to 7 bar. The excess pressure of the liquid introduced into a gas stream flowing through the milling zone or directly into the milling zone is likewise in the range of from 5 bar to 10 bar, especially from 6 bar to 7 bar, but the excess pressure of the liquid is in each case from 0.25 bar to 1 bar above the pressure of the milling gas.

The process according to the invention is preferably carried out at ambient temperature. The temperature may, however, also be up to 50°C, especially up to 30°C, below or above the ambient temperature, depending, for example, on the nature of the finely milled solid, on the pressure or on the temperature of the finely milled solid or of the liquid.

Gas-jet mills and fluidised-bed counter-jet mills are especially suitable for carrying out the process according to the invention because, apart from the particles of the solid moved by the milling gas, they comprise no mechanically moved parts. As a result, mechanical ignition sources are avoided, which constitutes a considerable advantage when processing combustible mixtures.

Further suitable fine milling apparatuses are mechanical mills, such as impact mills or hammer mills, in which the material for milling is moved through the mill by means of a carrier gas and/or a mechanical feed device, such as a star wheel or a feed screw. In an impact mill, the solid is comminuted against the impact surfaces arranged in the milling zone. In a hammer mill, the solid is comminuted by rotating hammers, and gas is preferably used as the carrier medium for the material for milling. The pressure of the carrier gas is generally in the region of the ambient pressure. Depending on the type of milling apparatus, the pressure may also be up to 0.3 bar below or above the ambient pressure. The liquid is sprayed into the milling apparatus with a pressure that is above the pressure prevailing in the mill. Unitary or binary nozzles are especially suitable for spraying in the liquid. When a unitary nozzle is used, the pressure is preferably in the range of from 4 bar to 10 bar. When a binary nozzle is used, the pressure is preferably in the range of from 3 bar to 4 bar.

The process according to the invention is preferably also carried out at ambient temperature when a mechanical mill is used. However, the temperature may also be up to 50°C, especially up to 30°C, below or above the ambient temperature, depending, for example, on the nature of the finely milled solid, on the pressure or on the temperature of the finely milled solid or of the liquid.

As solids there come into consideration according to the invention all solid organic or inorganic substances in pure form or in the form of mixtures of different solids. The process according to the invention is especially advantageous in the case of mixtures of solids, such as solid ready-for-use formulations of pharmaceutical or agrochemical active ingredients or solid preparations of foodstuffs. For example, solid ready-formulated crop protection products, such as solid acaricides, fungicides, growth regulators, herbicides, insecticides or nematocides, can be charged with a liquid in order to improve their in-use properties, for example to achieve a better wetting of the plant or an improvement in the biological activity of the product or to facilitate the preparation of a spray broth by an improved distribution behaviour of the product in water. The particle size (diameter) of the solids or solid mixtures introduced into the mill as the material for fine milling is generally in the range of from 40 µm to 200 µm, preferably from 80 µm to 120 µm. After the completion of the fine milling operation, the particle size (diameter) of the finely milled solid is generally in the range of from 1 µm to 10 µm, preferably from 2 µm to 4 µm.

The process according to the invention can also be used for the homogeneous application of liquids to solids that are already in finely milled form. The present invention relates also to this specific embodiment of the process.

The amount of the liquid to be applied is in the range of from 0.001 % by weight to 20 % by weight, especially from 0.01 % by weight to 10 % by weight, preferably from 0.5 % by weight to 5 % by weight, based on the amount of the solid.

When the process according to the invention is carried out in mills in which the material for milling is moved by a milling gas stream or by a carrier gas stream, air is generally used as the milling or carrier gas. When processing explosive or readily oxidisable materials, however, it is also possible to use an inert gas, especially nitrogen.

As liquids that can be applied by means of the process according to the invention to finely milled solids there come into consideration, for example, liquid active ingredients, solutions of active ingredients, surface-active substances, such as non-ionic, anionic or cationic surfactants or detergents, flavourings and attractants, it being possible for surface-active substances, flavourings and attractants to be used, according to their physical properties, in the form of the substances *per se* or in the form of solutions.

The present invention relates also to a device for carrying out the process according to the invention, which device, as well as comprising means for introducing and for finely milling the material for milling and means for separating off and discharging the product, comprises a device which enables a finely divided liquid to be metered into the milling zone during the fine milling operation or simultaneously with the introduction of the material for milling. The device according to the invention is preferably based on a mill through which there flows a milling or carrier gas, which mill, as well as comprising a milling zone, a pipe for supplying the material for milling to the milling zone, a pipe for supplying the milling or carrier gas to the milling zone, a discharge pipe for the milling or carrier gas containing the finely milled solid charged with a liquid, and a separating device for separating the finely milled solid charged with a liquid from the milling or carrier gas, comprises a device which enables a finely divided liquid to be metered into the milling zone either by way of the carrier gas stream or directly.

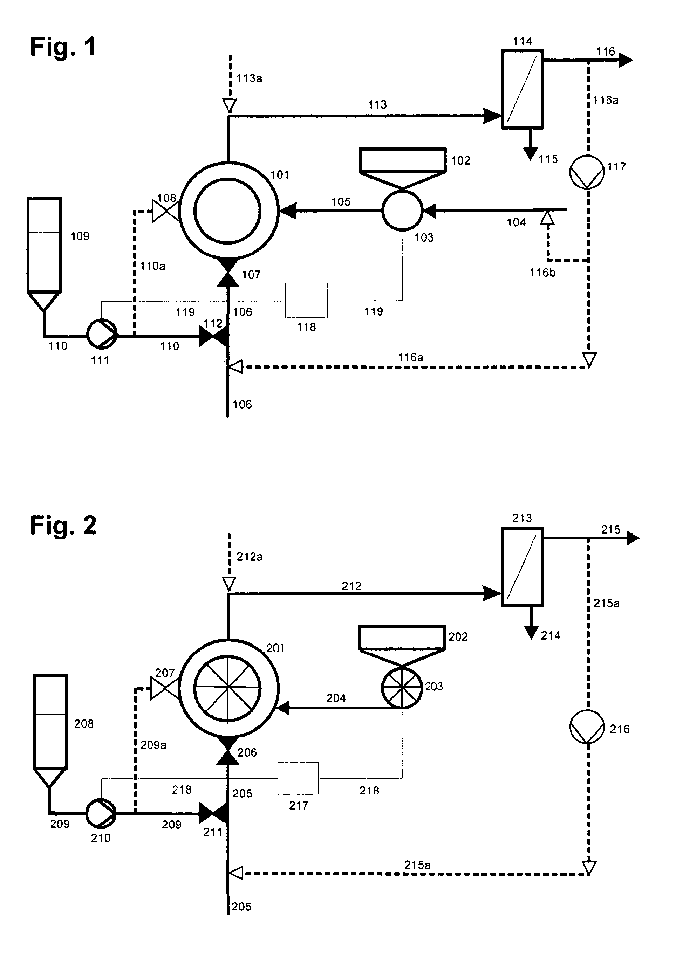

Examples of suitable devices for carrying out the process according to the invention are shown in the Figures 1 (Fig. 1) and 2 (Fig. 2).
Figure 1 shows, in diagrammatic form, a gas-jet or fluidised-bed counter-jet mill which is provided according to the invention with a device for introducing a liquid. The continuous lines show the standard device. Several of the possible alternative embodiments are shown by broken lines.
Figure 2 shows, in diagrammatic form, a mechanical mill which is provided according to the invention with a device for introducing a liquid. In Figure 2 also, the continuous lines show the standard device, while several of the possible alternative embodiments are shown by broken lines.

The process according to the invention is explained hereinbelow with reference to the devices shown in the Figures 1 and 2.

### Figure 1

The material for milling is introduced into the gas-jet mill **101** from the storage container **102** *via* the feed device **103** and the pipe **105.** The material for milling is fed into the gas-jet mill by means of a milling gas stream which is supplied through the pipe **104.** At the same time, the liquid that is to be applied to the finely milled solid is introduced, from the storage container **109** *via* the pipe **110** and the metering pump **111,** into the carrier gas supplied through the pipe 106. The liquid is either supplied via the nozzle **112,** or is supplied directly (not shown in Figure 1), to the carrier gas stream flowing at very high speed. The nozzle **112** is not absolutely necessary, because the liquid is atomised in the carrier gas stream flowing at very high speed even without the use of a nozzle ("Venturi effect"). The carrier gas/liquid mixture thus formed is introduced into the gas-jet mill **101** *via* the pipe **106** and the nozzle **107.** The introduction of the carrier gas/liquid mixture into the gas-jet mill **101** can also take place using several nozzles simultaneously. The ratio of solid to liquid is controlled by means of the regulating unit **118,** which is connected to the metering pump **111** and the feed device **103** by the control lines **119.** The product/gas mixture leaving the gas-jet mill **101** is supplied via the pipe **113** to the separating device **114,** from which the product separated from the gas is removed *via* the pipe **115.** The gas separated from the product is discharged *via* the pipe **116.** If desired, additional carrier gas can be supplied *via* the pipe **113a** to the pipe **113** containing the product/gas mixture, in order to support the carriage of the product/gas mixture to the separating device **114.** Instead of being introduced *via* the pipe **110** (not shown in Figure 1) or the nozzle **112** into the carrier gas supplied through the pipe **106,** the liquid can also be introduced directly into the gas-jet mill **101** *via* the pipe **110a** and the liquid nozzle **108.** Furthermore, it is possible, that the gas separated from the product is not discharged from the device *via* the pipe **116** but is returned *via* the pipe **116a** and the compressor **117** into the pipe **106** for the carrier gas. This procedure is advisable especially when a gas other than air, e. g. nitrogen, is used. A portion of the gas returned through the pipe **116a** can also be introduced *via* the pipe **116b** into the pipe **104** and used as milling gas. The supply of fresh gas, which is necessary owing to losses of gas, can be effected *via* the pipe **104** and/or the pipe **106.**

### Figure 2

The material for milling is introduced into the mechanical mill **201** from the storage container **202** *via* the feed device **203,** for example a star wheel or a feed screw, and the pipe **204.** At the same time, the liquid that is to be applied to the finely milled solid is introduced, from the storage container **208** *via* the pipe **209,** the metering pump **210** and the nozzle **211,** into the carrier gas supplied through the pipe **205.** The carrier gas/liquid mixture thus formed is introduced into the mechanical mill **201** *via* the pipe **205** and the nozzle **206.** The introduction of the carrier gas/liquid mixture into the mechanical mill **201** can also take place using several nozzles simultaneously. The ratio of solid to liquid is controlled by the regulating unit **217,** which is connected to the feed device **203** and the metering pump **210** by the control lines **218.** The product/gas mixture leaving the mechanical mill **201** is supplied *via* the pipe **212** to the separating device **213,** from which the product separated from the gas is removed via the pipe **214.** The gas separated from the product is discharged *via* the pipe **215.** If desired, additional carrier gas can be supplied *via* the pipe **212a** to the pipe **212** containing the product/gas mixture, in order to support the carriage of the product/gas mixture to the separating device **213.** Instead of being introduced via the nozzle **211** into the carrier gas supplied through the pipe **205,** the liquid can also be introduced directly into the mechanical mill **201** *via* the pipe **209a** and the liquid nozzle **207.** Furthermore, it is possible, that the gas separated from the product is not discharged from the device *via* the pipe **215** but is returned *via* the pipe **215a** and the compressor **216** into the pipe **205** for the carrier gas. This procedure is advisable especially when a gas other than air, e. g. nitrogen, is used. The supply of fresh gas, which is necessary owing to losses of gas, can be effected *via* the pipe **205.**

The process according to the invention for the production of finely milled solids charged with a liquid has, for example, the following advantages over the known process:
- The process according to the invention constitutes a substantial simplification, because it enables the solid to be finely milled and the finely milled solid to be charged with a liquid in a single operation, while at least three operations are required with the known process.
- The process according to the invention permits a homogeneous distribution of the liquid on the particles of the finely milled solid and accordingly a substantially better product quality.
- It is possible using the process according to the invention for even very small amounts of highly viscous liquids to be applied homogeneously to the particles of the finely milled solid in a simple manner, which with the known process is possible only with a considerable outlay or is not possible at all.
- The process according to the invention, especially when carried out in gas-jet mills or fluidised-bed counter-jet mills, offers an increased safety in the processing of combustible solids or mixtures of solids, because in gas-jet mills or fluidised-bed counter-jet mills, in contrast to the mixers used in accordance with the prior art, there are no mechanically moved machine parts which can act as sources of ignition.

The following Items further explain the present invention:

### Items:

1. A process of applying a liquid to a finely milled solid, in which the liquid to be applied to a solid that is to be finely milled is introduced into the milling zone of a fine milling device during the milling operation or simultaneously with the introduction of the solid to be finely milled, and the fine milling is carried out in the presence of the finely divided liquid.
2. A process according to item 1, in which there is used a fine milling device in which the material for milling is moved by a gas stream flowing through the milling zone.
3. A process according to either item 1 or item 2, in which a gas-jet or fluidised-bed counter-jet mill is used.
4. A process according to either item 1 or item 2, in which an impact mill is used.
5. A process according to either item 1 or item 2, in which a hammer mill is used.
6. A process according to any one of items 1 to 5, in which a ready-formulated active ingredient mixture is used as the solid to be finely milled and charged with a liquid.
7. A process according to any one of items 1 to 6, in which a ready-formulated pesticide or a crop protection product is used as the material for milling.
8. A process according to any one of items 1 to 7, in which the particle size of the solid to be finely milled is in the range of from 40 µm to 200 µm.
9. A process according to any one of items 1 to 8, in which the particle size of the solid to be finely milled is in the range of from 80 µm to 120 µm.
10. A process according to any one of items 1 to 9, in which the liquid to be applied to the finely milled solid is a liquid active ingredient, the solution of an active ingredient, a surface-active substance, a flavouring or an attractant.
11. A process according to any one of items 1 to 10, in which the amount of liquid to be applied is in the range of from 0.01 to 10 % by weight, based on solid to be finely milled.
12. A device for carrying out the process according to items 1 to 11, which device, as well as comprising means for introducing and for finely milling the material to be milled and means for discharging the product, comprises a device which enables a finely divided liquid to be metered into the milling zone during the fine milling operation or simultaneously with the introduction of the material for milling.
13. A device according to item 12, through which a milling or carrier gas flows and which, as well as comprising a milling zone, a pipe for supplying the material for milling to the milling zone, a pipe for supplying the milling or carrier gas to the milling zone, a discharge pipe for the milling or carrier gas containing the finely milled solid charged with a liquid, and a separating device for separating the finely milled solid charged with a liquid from the milling or carrier gas, comprises a device which enables a finely divided liquid either to be metered into the milling zone by way of the milling or carrier gas stream or to be metered directly into the milling zone.
14. A device according to either item 12 or item 13, comprising a gas-jet mill **101,** a storage container **102** for the material for milling, a feed device **103** for the material for milling, which feed device **103** is provided with a supply pipe **104** for carrier gas, a supply pipe **105** for introducing the material for milling into the gas-jet mill **101,** a supply pipe **106** for the milling gas, a discharge pipe **113** for the milling gas containing the finely milled solid charged with a liquid, a device **114** for separating the finely milled solid charged with a liquid from the milling gas, a pipe **115** for removing the finely milled solid charged with a liquid, and a discharge pipe **116** for the milling gas freed of the solid, which device is provided with a storage container **109** for the liquid to be applied, a pipe **110** for supplying the liquid to be applied into the milling gas stream **106,** a liquid pump **111,** arranged in the supply pipe **110,** for metering the liquid either into the milling gas stream **106** or *via* pipe **110a** and a nozzle **108** into the gas-jet mill **101,** and a regulating device **118,** which is connected to the pump **111** and the feed device **103** *via* a control line **119,** for controlling the ratio of solid to be finely milled to liquid to be applied.
15. A device according to item 14, which, instead of being provided with a pipe **116** for discharging the milling gas freed of the finely milled solid, is provided with a pipe **116a** for returning the milling gas freed of the solid into the supply pipe **106** and with a compressor **117** arranged in the pipe **116a.**
16. A device according to either item 12 or item 13, comprising a mechanical mill **201,** a storage container **202** for the material for milling, a feed device **203** for the material for milling, a supply pipe **204** for introducing the material for milling into the mechanical mill **201,** a supply pipe **205** for the carrier gas, a discharge pipe **212** for the carrier gas containing the finely milled solid charged with a liquid, a device **213** for separating the finely milled solid charged with a liquid from the carrier gas, a pipe **214** for removing the finely milled solid charged with a liquid, and a discharge pipe **215** for the carrier gas freed of the solid, which device is provided with a storage container **208** for the liquid to be applied, a supply pipe **209** for the liquid to be applied, a liquid pump **210,** arranged in the supply pipe **209,** for metering the liquid either into the carrier gas stream **205** or *via* pipe **209a** and a nozzle **207** into the mechanical mill **201,** and a regulating device **217,** connected to the pump **210** and the feed device **203** *via* a control line **218,** for controlling the ratio of solid to be finely milled to liquid to be applied thereto.
17. A device according to item 16, which, instead of being provided with a pipe **215** for discharging the milling gas freed of the finely milled solid, is provided with a pipe **215a** for returning the milling gas freed of the solid into the supply pipe **205** and with a compressor **216** arranged in the pipe **215a.**
18. A device according to either item 14 or item 16, in which the liquid container **109** or **208,** the pipe **110** or **209** and the pump **111** or **210** is provided with a heating device.

The following Examples explain the present invention in greater detail. Neither these Examples nor the Examples shown in the Figures 1 and 2 constitute a limitation of the present invention.

### Examples

Example 1: A water dispersible powder for slurry seed treatment (WS formulation), which comprises as active ingredient the insecticidal compound thiamethoxam in an amount of 70 % by weight, is prepared. The solid raw material, consisting of the insecticidally active ingredient and customary auxiliaries and adjuvants, which has a mean particle size (diameter) of about 100 µm, is fed into a gas-jet mill according to Figure 1. Air is used as the milling gas and the carrier gas. A highly viscous polyoxyethylene-polyoxypropylene copolymer liquid, heated to 50°C, having a dynamic viscosity of >4000 mPas, is added to the carrier gas stream in an amount of 4.5 % by weight, based on the amount of the solid raw material fed in. The excess pressure is 6 bar in the milling gas stream and 6.5 bar in the carrier gas/liquid stream. In the resulting product, which exhibits improved handling properties, 50 % of the milled particles have a particle size (diameter) of less than 3.7 µm and 90 % of the milled particles have a particle size (diameter) of less than 11.1 µm, the liquid being homogeneously distributed on the particles of the finely milled solid.

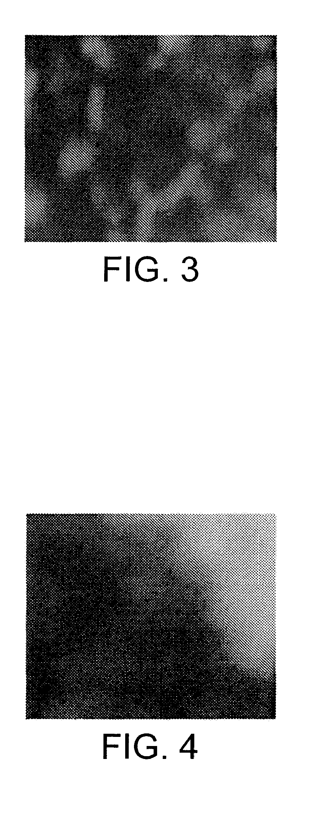

The product thus obtainable exhibits a homogeneous distribution of the liquid on the particles of the finely milled solid, which cannot be obtained using the process of the prior art. This difference in the homogeneities of the products is shown in the Figures 3 and 4, Figure 3 illustrating the product quality achievable by the prior art process, i. e. by finely milling the solid, adding to the finely milled solid the liquid to be applied, mixing, further milling and mixing again, and Figure 4 illustrating the homogeneity achievable by the process according to the invention.

Not only exhibits the product thus obtainable a substantially better quality, but the process for its preparation also constitutes, compared with the known process, a substantial simplification. At the same time, the risk of a powder explosion is markedly reduced, because according to the exemplified process there are no mechanically moved machine parts, which could come into contact with the product and act as sources of ignition.

Example 2: In a manner analogous to that described in Example 1 the product obtainable according to the process of Example 1 can also be prepared using an inert milling gas, such as nitrogen or argon.

## Claims

1. A fine milling device suitable for applying a liquid to a solid that is to be finely milled comprising a milling zone for finely milling said solid; means for introducing said solid to said milling zone; a nozzle for introducing said liquid as a finely divided liquid into said milling zone either separately during the milling operation or simultaneously with said solid that is to be finely milled; a regulating unit for controlling the ratio of said solid to said liquid; and means for discharging product.

2. A device according to claim 1 through which a carrier gas and an optional milling gas flow and which comprises a pipe for supplying the solid to the milling zone; pipes for supplying said carrier gas and said optional milling gas to the milling zone; a discharge pipe for the product plus gas mixture leaving the milling zone; a separating means for separating said product from said gas mixture; and a means which enables a liquid either to be metered into the milling zone by way of the carrier gas or to be metered directly into the milling zone.

3. A device according to either claim 1 or claim 2 comprising a gas-jet mill [101]; a storage container [102] for the solid; a feed means [103] for the solid which feed means [103] is provided with a supply pipe [104] for a milling gas; a supply pipe [105] for introducing the solid into the gas-jet mill [101]; a supply pipe [106] for a carrier gas; a discharge pipe [113] for the product plus gas mixture leaving the gas-jet mill [101]; a means [114] for separating the product from the gas; a pipe [115] for removing the product; a discharge pipe [116] for the gas freed of the product; a storage container [109] for the liquid to be applied; a supply pipe [110] for the liquid;, a liquid pump [111], arranged in the supply pipe [110], for metering the liquid either into the carrier gas [106] or *via* a pipe [110a] and a nozzle [108] into the gas-jet mill [101]; and a regulating means [118], which is connected to the pump [111] and the feed means [103] *via* a control line [119], for controlling the ratio of solid to liquid.

4. A device according to claim 3, which, instead of being provided with a pipe [116] for discharging the gas freed of the product, is provided with a pipe [116a] for returning the gas freed of the product into the supply pipe [106]; and with a compressor [117] arranged in the pipe [116a].

5. A device according to either claim 1 or claim 2, comprising a mechanical mill [201]; a storage container [202] for the solid; a feed means [203] for the solid; a supply pipe [204] for introducing the solid into the mechanical mill [201]; a supply pipe [205] for a carrier gas; a discharge pipe [212] for the product plus gas mixture leaving the mechanical mill [201]; a means [213] for separating the product from the gas; a pipe [214] for removing the product; a discharge pipe [215] for the gas freed of the product; a storage container [208] for the liquid to be applied; a supply pipe [209] for the liquid to be applied; a liquid pump [210], arranged in the supply pipe [209], for metering the liquid either into the carrier gas [205] or *via* a pipe [209a] and a nozzle [207] into the mechanical mill [201]; and a regulating means [217], connected to the pump [210] and the feed device [203] *via* a control line [218], for controlling the ratio of solid to liquid.

6. A device according to claim 5, which, instead of being provided with a pipe [215] for discharging the gas freed of the product, is provided with a pipe [215a] for returning the gas freed of the product into the supply pipe [205]; and with a compressor [216] arranged in the pipe [215a].

7. A device according to either claim 3 or claim 5, in which the liquid container [109 or 208], the pipe [110 or 209] and the pump [111 or 210] are provided with heating means.

8. Use of a device according to any one of claims 1 to 7.

9. Use of a device as claimed in claim 8 to apply a liquid to thiamethoxam.
